(19) Europäisches Patentamt
European Patent Office
Office européen des brevets

(11) EP 0 443 058 B1

# (12) EUROPÄISCHE PATENTSCHRIFT

(45) Veröffentlichungstag und Bekanntmachung des Hinweises auf die Patenterteilung:
**23.04.1997 Patentblatt 1997/17**

(51) Int Cl.[6]: **C08G 63/193**, C08G 63/64

(21) Anmeldenummer: **90103299.5**

(22) Anmeldetag: **21.02.1990**

## (54) Polyester und Polyestercarbonate auf Basis von 1,1-Bis-(4-hydroxyphenyl)-alkylcycloalkanen

Polyesters and polyestercarbonates based on 1,1-bis-(4-hydroxyphenyl)-alkylcycloalkanes

Polyesters et polyestercarbonates à base de 1,1-bis-(4-hydroxyphényl)-alcoylcycloalcanes

(84) Benannte Vertragsstaaten:
**ES NL**

(43) Veröffentlichungstag der Anmeldung:
**28.08.1991 Patentblatt 1991/35**

(73) Patentinhaber: **BAYER AG**
**51368 Leverkusen (DE)**

(72) Erfinder:
- **Serini, Volker, Dr.**
  **D-4150 Krefeld (DE)**
- **Freitag, Dieter, Dr.**
  **D-4150 Krefeld (DE)**
- **Grigo, Ulrich**
  **D-4152 Kempen (DE)**
- **Westeppe, Uwe, Dr.**
  **D-4020 Mettmann (DE)**

(56) Entgegenhaltungen:
**EP-A- 0 166 834**
**EP-A- 0 419 926**
**DE-A- 3 345 110**
**FR-A- 2 367 091**
**US-A- 4 438 241**
**US-A- 4 469 833**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 443 058 B1

Printed by Jouve, 75001 PARIS (FR)

## Beschreibung

Gegenstand der Erfindung sind Polyester und Polyestercarbonate aus

a) aromatischen Diphenolen,
$b_1$) aliphatischen und/oder cycloaliphatischen und/oder aromatischen Dicarbonsäuren und gegebenenfalls
$b_2$) Kohlensäure,
enthaltend $b_1$) in einer Menge von 0,1 bis 100 Mol-% und gegebenenfalls $b_2$) in einer Menge von 0 bis 99,9 Mol-%, bezogen auf ($b_1 + b_2$), die dadurch gekennzeichnet sind, daß a) zu 0,1 bis 100 Mol-% aus Diphenolen der Formel

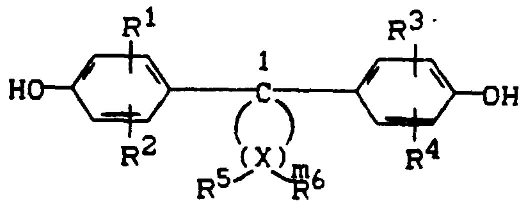 (I),

besteht, worin

| | |
|---|---|
| $R^1$, $R^2$, $R^3$ und $R^4$ | unabhängig voneinander Wasserstoff, $C_1$-$C_{12}$-Kohlenwasserstoffrest, Halogen, |
| m | die ganze Zahl 4 oder 5 ist, |
| $R^5$ und $R^6$, | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X $R^5$ und $R^6$ gleichzeitig Alkyl bedeuten.

Polyarylate bzw. Polyestercarbonate auf Basis von 1,1-Bis-(hydroxyphenyl)-alkylcycloalkanen mit einer Ringgröße von 8-16 C-Atomen werden in US-A-4 438 241 und EP-A-0 166 834 beschrieben. Aus US-A- 4 469 833 gehen entsprechende Polyestercarbonate mit einer Ringgröße der Alkylcycloalkylidenreste von 4-16 C-Atomen hervor.

Die erfindungsgemäßen Polyester und Polyestercarbonate besitzen gegenüber bekannten Polyestern und Polyestercarbonaten, wie z.B. gegenüber solchen aus Bisphenol-A und aus 1,1-Bis-(4-hydroxyphenyl)-cyclohexan, überraschend gute Eigenschaften, die für die Technik von großer Bedeutung sind.

So weisen sie, auch schon bei kleinen Anteilen an einkondensierten Bisphenolen der Formel (I), überraschend hohe Glastemperaturen $T_g$ auf. Weiterhin zeigen sie, auch schon bei kleinen Anteilen an einkondensierten Bisphenolen der Formel (I), ein besonders gutes Entformungsverhalten. Sie sind außerdem sehr schlagzäh und kerbschlagzäh und zeigen eine außergewöhnlich gute Schmelzfließfähigkeit, wenn man die hohe Glastemperatur $T_g$ in Betracht zieht. Zudem sind die erfindungsgemäßen Polyester und Polyestercarbonate besonders kriechstromfest, hydrolysestabil und unempfindlich gegen Spannungsriß, so insbesondere auch in Kontakt mit Benzinen und Ölen. Überraschend ist auch ihre geringe Kristallisationsneigung.

In Formel (I) sind $R^1$, $R^2$, $R^3$ und $R^4$ bevorzugt Wasserstoff, Methyl, Ethyl, Phenyl, Cyclohexyl, Chlor und Brom, besonders bevorzugt jedoch Wasserstoff, Methyl und Brom. Wenn mehr als einer der Reste $R^1$, $R^2$, $R^3$ und $R^4$ ungleich Wasserstoff ist, werden gleiche Substituenten bevorzugt. Wenn zwei der Reste $R^1$, $R^2$, $R^3$ und $R^4$ ungleich Wasserstoff sind, wird die o,o'-Substitution, bezogen auf die phenolischen OH-Gruppen der Formel (I), bevorzugt. Wenn alle vier Reste $R^1$, $R^2$, $R^3$ und $R^4$ ungleich Wasserstoff sind, wird die o,o,o',o'-Substitution, bezogen wie vor, bevorzugt.

In Formel (I) ist m bevorzugt 5.

Weiterhin sind in Formel (I) bevorzugt an 1 - 2 Atomen X, insbesondere nur an einem Atom X, $R^5$ und $R^6$ gleichzeitig Alkyl. Bevorzugter Alkylrest ist Methyl; die X-Atome in α-Stellung zu dem di-phenyl-substituierten C-Atom (C-1) sind bevorzugt nicht dialkylsubstituiert, dagegen ist die Alkyl-disubstitution in β-Stellung zu C-1 bevorzugt.

Erfindungsgemäß einsetzbare Bisphenole der Formel (I) sind z.B.:

1,1-Bis-(4-hydroxyphenyl)-3,3-dimethyl-5-methylcyclohexan,
1,1-Bis-(4-hydroxyphenyl)-3,3-dimethyl-5,5-dimethylcyclohexan,
1,1-Bis-(4-hydroxyphenyl)-3,3-dimethyl-4-methylcyclohexan,
1,1-Bis-(4-hydroxyphenyl)-3,3-dimethyl-5-ethylcyclohexan,

1,1-Bis-(4-hydroxyphenyl)-3,3-dimethyl-5-methylcyclopentan,
1,1-Bis-(3,5-dimethyl-4-hydroxyphenyl)-3,3-dimethyl-5-methyl-cyclohexan,
1,1-Bis-(3,5-diphenyl-4-hydroxyphenyl)-3,3-dimethyl-5-methyl-cyclohexan,
1,1-Bis-(3-methyl-4-hydroxyphenyl)-3,3-dimethyl-5-methyl-cyclohexan,
1,1-Bis-(3-phenyl-4-hydroxyphenyl)-3,3-dimethyl-5-methyl-cyclohexan,
1,1-Bis-(3,5-dichlor-4-hydroxyphenyl)-3,3-dimethyl-5-methyl-cyclohexan,
1,1-Bis-(3,5-dibrom-4-hydroxyphenyl)-3,3-dimethyl-5-methyl-cyclohexan,

Besonders bevorzugt wird das 1,1-Bis-(4-hydroxyphenyl)-3,3-dimethyl-5-methyl-cyclohexan.

Die erfindungsgemäßen Dihydroxydiphenylcycloalkane der Formel (I) können in an sich bekannter Weise durch Kondensation von Phenolen der Formel (II) und/oder (III)

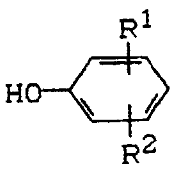
(II)

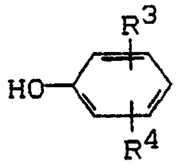
(III)

und Ketonen der Formel (IV)

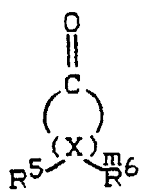
(IV)

hergestellt werden, wobei in den Formeln (II), (III) und (IV)
X, $R^1$, $R^2$, $R^3$, $R^4$, $R^5$, $R^6$ und m die für Formel (I) angegebene Bedeutung haben.

Die erfindungsgemäßen Dihydroxydiphenylcycloalkane der Formel (I), in denen $R^1$, $R^2$, $R^3$ und $R^4$ teilweise oder ganz Halogen bedeuten, können - zumindestens zum Teil - auch durch Halogenierung der entsprechenden unsubstituierten Dihydroxydiphenylcycloalkane erhalten werden. So kann beispielsweise das 1,1-Bis-(4-hydroxyphenyl)-3,3-dimethyl-5-methyl-cyclohexan durch Kernchlorierung oder Kernbromierung nach an sich bekannten Methoden zu dem 1,1-Bis-(3,5-dichlor-4-hydroxyphenyl)-3,3-dimethyl-5-methyl-cyclohexan oder dem 1,1-Bis-(3,5-dibrom-4-hydroxyphenyl)-3,3-dimethyl-5-methyl-cyclohexan umgesetzt werden.

Diphenole der Formel I und ihre Herstellung sind in der Deutschen Patentanmeldung P 38 32 396.6 (DE-A-3 832 396) näher beschrieben.

Aromatische Diphenole (Komponente a), die neben denen der Formel I für den Aufbau der erfindungsgemäßen Polyester und Polyestercarbonate verwendet werden können, sind beispielsweise:
Hydrochinon, Resorcin, Dihydroxydiphenyle, Bis-(hydroxyphenyl)-alkane, Bis-(hydroxyphenyl)-cycloalkane Bis-(hydroxyphenyl)-sulfide, Bis-(hydroxyphenyl)-ether, Bis-(hydroxyphenyl)-ketone, Bis-(hydroxyphenyl)-sulfone, $\alpha,\alpha'$-Bis-(hydroxyphenyl)-isopropylbenzole, Pentamethyl-(hydroxyphenyl)-indanole, sowie entsprechende kernsubstituierte Verbindungen.

Diese und weitere geeignete aromatische Dihydroxyverbindungen sind z.B. in Hermann Schnell, "Chemistry and Physics of Polycarbonates", Polymer Reviews 9, Interscience Publishers, New York 1964; in V. Serini, D. Freitag und H. Vernaleken, "Polycarbonate aus o,o,o',o'-tetramethylsubstituierten Bisphenolen", Angewandte Makromolekulare Chemie 55 (1976) 175-189, in den US-PS 3 028 365, 2 999 835, 3 148 172, 3 271 368, 2 991 273, 3 271 367, 3 780 078, 3 014 891 und 2 999 846, in den DE-OS 1 570 703, 2 063 050, 2 063 052, 2 211 957, 2 402 175, 2 402 176, 2 402 177 und in der FR-PS 1 561 518 beschrieben.

Bevorzugt als Diphenole sind:

Hydrochinon, Bis-(4-hydroxyphenyl), 2,2-Bis-(4-hydroxyphenyl)-propan, Bis-(4-hydroxyphenyl)-sulfid, Bis-(4-hydroxyphenyl)-ether, Bis-(4-hydroxyphenyl)-keton, Bis-(4-hydroxyphenyl)-sulfon, Bis-(4-hydroxyphenyl)-methan, 1,1-Bis-(4-hydroxyphenyl)-cyclohexan, $\alpha,\alpha'$-Bis-(4-hydroxyphenyl)-p-diisopropylbenzol, 1,1-Bis-(4-hydroxyphenyl)-1-phenyl-ethan, 2,2-Bis-(3-methyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 2,2-Bis-(3,5-dimethyl-4-hydroxyphenyl)-propan, Bis-(3,5-dimethyl-4-hydroxyphenyl)-methan, 2,2-Bis-(3,5-dimethyl-4-hydroxyphenyl)-butan, Bis-(3,5-dimethyl-4-hydroxyphenyl) und 1,1,3,4,6-Pentamethyl-3-(3,5-dimethyl-4-hydroxyphenyl)-indan-5-ol, besonders bevorzugt Bis-(4-hydroxyphenyl), 2,2-Bis-(4-hydroxyphenyl)-propan und 2,2-Bis-(3,5-dimethyl-4-hydroxyphenyl)-propan, ganz besonders bevorzugt 2,2-Bis-(4-hydroxyphenyl)-propan.

Aliphatische, cycloaliphatische und aromatische Dicarbonsäuren (Komponente $b_1$), die für den Aufbau der erfindungsgemäßen Polyester und Polyestercarbonate geeignet sind, sind beispielsweise:

Oxalsäure, Malonsäure, Bernsteinsäure, Glutarsäure, Adipinsäure, Pimelinsäure, Suberinsäure, Azelainsäure, Sebazinsäure, Nonandicarbonsäure, Decandicarbonsäure, Dodecandicarbonsäure, Octadecandicarbonsäure, Dimethylmalonsäure, Dimerfettsäure, 1,4-Cyclohexandicarbonsäure, Tetrahydroterephthalsäure, Tetrahydroisophtalsäure, Tetrahydrophthalsäure, 3,6-Endomethylentetrahydrophthalsäure, o-, m-, p-Phenylendiessigsäure, Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5-dicarbonsäure.

Bevorzugt werden die erfindungsgemäßen Polyester und Polyestercarbonate aus aromatischen Dicarbonsäuren hergestellt. Von den aromatischen Dicarbonsäuren werden besonders bevorzugt die Terephthalsäure und/oder Isophthalsäure eingesetzt. Ganz besonders bevorzugt ist die Terephthalsäure.

Bevorzugt werden die erfindungsgemäßen Polyester und Polyestercarbonate, in denen die aromatischen Diphenole (Komponente a) zu 1 bis 100 Mol.-%, bevorzugt zu 5 bis 100 Mol.-% und insbesondere zu 10 bis 100 Mol.-% aus Diphenolen der Formel (I) bestehen. Von den Polyestern und Polyestercarbonaten, in denen die aromatischen Diphenole (Komponente a) zu 10 bis 100 Mol.-% aus solchen der Formel (I) bestehen, werden die mit 10 bis 50 Mol.-% und 55 bis 100 Mol.-% aromatischen Diphenolen der Formel (I) bevorzugt, die mit 10 bis 40 Mol.-% und 70 bis 100 Mol.-% aromatischen Diphenolen der Formel (I) besonders bevorzugt, die mit 15 bis 35 Mol.-% und 85 bis 100 Mol.-% aromatischen Diphenolen der Formel (I) ganz besonders bevorzugt und insbesondere die mit 100 Mol.-% aromatischen Diphenolen der Formel (I) bevorzugt.

Bevorzugt werden die erfindungsgemäßen Polyestercarbonate, in denen die Dicarbonsäuren (Komponente $b_1$) in einer Menge von 5 bis 98 Mol.-%, bevorzugt von 15 bis 95 Mol.-%, besonders bevorzugt von 20 bis 50 Mol.-% und 60 bis 95 Mol.-% und insbesonders von 25 bis 45 Mol.-% und 80 bis 95 Mol.-%, bezogen auf die Summe der Dicarbonsäuren (Komponente $b_1$) und der Kohlensäure (Komponente $b_2$), enthalten sind.

Die erfindungsgemäßen Polyester und Polyestercarbonate können nach Verfahren hergestellt werden, wie sie für die Polyester- bzw. Polyestercarbonat-Herstellung aus der Literatur bekannt sind, so z.B. nach Verfahren in homogener Lösung, nach Schmelzumesterungsverfahren und nach dem Zweiphasengrenzflächenverfahren. Bevorzugt werden Schmelzumesterungsverfahren und insbesondere das Zweiphasengrenzflächenverfahren angewandt.

Verfahren zur Herstellung von Polyestern und Polyestercarbonaten in homogener Lösung werden beispielsweise beschrieben in den Patentschriften DE-OS 1 420 475, US 3 169 121 und US 4 156 069 und in der Monographie Polymer Reviews, Volume 10, Condensation Polymers by Interfacial and Solution Methods, Paul W. Morgan, Interscience Publishers New York 1965, Kap. VIII, S. 325 ff, Polyester. So können beispielsweise Polyester durch Umsetzung von Dicarbonsäuredichloriden mit aromatischen Dihydroxyverbindungen in Gegenwart von Pyridin als Säureacceptor und Pyridin oder chlorierten Kohlenwasserstoffen wie Methylenchlorid und Chlorbenzol als Lösemitteln hergestellt werden.

Polyestercarbonate können beispielsweise ebenso in homogener Lösung hergestellt werden, indem Phosgen, Dicarbonsäure und aromatische Dihydroxyverbindung oder Phosgen, Dicarbonsäuredichlorid und aromatische Dihydroxyverbindung als Monomere eingesetzt werden. Die Reaktion verläuft schon bei niedrigen Temperaturen, so z.B. bei 10 bis 40°C, ausreichend schnell.

Schmelzumesterungsverfahren zur Herstellung von Polyestern und Polyestercarbonaten sind beispielsweise das Acetat-Verfahren und das Phenylester-Verfahren.

Das Acetatverfahren wird beispielsweise beschrieben in den Patentschriften US 3 494 885, 4 386 186 und EP 26 120, 26 121, 26 684, 28 030, 39 845, 91 602, 97 970 sowie in der Monographie Polyesters, V.V. Korshak und S.V. Vinograda, Pergamon Press, Oxford, 1965, sowie in der Veröffentlichung V.V. Korshak und S.V. Vinograda, Chemiefasersymp., Abh. d. Akad. Wiss. Berlin 1 (1963) 355 ff. Bei diesem Verfahren werden im allgemeinen bei Temperaturen von 200 bis 400°C Bisacetate von aromatischen Dihydroxyverbindungen wie z.B. Bisphenol-A-diacetat, mit Dicarbonsäuren, z.B. aromatischen Dicarbonsäuren, wie Isophthalsäure und Terephthalsäure, in der Schmelze unter Abspaltung von Essigsäure zu aromatischen Polyestern umgesetzt. Dabei können zur Verbesserung der Schmelzfließfähigkeit des Polyesters während des Prozesses und zur Verhinderung einer Dicarbonsäuresublimation Hilfslösemittel eingesetzt werden wie z.B. Diphenylether, substituierte Cyclohexane und Decahydronaphthalin.

Die Reaktion kann gegebenenfalls katalysiert werden, wie z.B. mit Alkali- und Erdalkaliverbindungen, Ti-Verbindungen, Zn-Verbindungen, Sn-Verbindungen, Sb-Verbindungen und Mn-Verbindungen. Die Kondensationsreaktion kann, insbesondere bei kristallisierenden Polyestern, auch so vorgenommen werden, daß die Kondensationsreaktion nicht bis zum Ende in der Schmelze durchgeführt wird, sondern daß die Kondensation in der Schmelze nur bis zu

einem noch leicht fließenden Präpolymer erfolgt, welches dann unterhalb seines Schmelzpunktes bis zum Erhalt des gewünschten Kondensationsgrades einer Festphasenkondensation unterworfen wird. Dabei wird im allgemeinen nur wenig unterhalb des Polymerschmelzpunktes bei reduziertem Druck unter weiterer Abspaltung und Entfernung von Essigsäure der weitere Aufbau des Polymeren vollzogen.

Das Phenylesterverfahren zur Herstellung von aromatischen Polyestern und Polyestercarbonaten wird beispielsweise beschrieben in den Patentschriften US 4 661 580, 4 680 371, 4 680 372, EP 79 075, 146 887, 156 103, 234 913, 234 914, 240 301 und DE-AS 1 495 626, 2 232 877. Bei diesem Verfahren werden im allgemeinen bei Temperaturen von 200 bis 400°C aromatische Dihydroxyverbindungen wie z.B. Bisphenol-A mit aromatischen Dicarbonsäureestern, wie z.B. Isophthalsäurediphenylester und Terephthalsäurediphenylester, in der Schmelze unter Phenolabspaltung zu aromatischen Polyestern umgesetzt. Zur Herstellung von Polyestern nach diesem Verfahren können auch aromatische Dihydroxyverbindungen, Dicarbonsäuren und Diester der Kohlensäure wie Diphenylcarbonat als Ausgangsstoffe umgesetzt werden. In diesem Fall werden die für die Reaktion benötigten Phenylester der Dicarbonsäuren intermediär unter $CO_2$-und Phenolabspaltung gebildet.

Zur Herstellung von Polyestercarbonaten nach dem Phenylesterverfahren werden im allgemeinen zusätzlich zu den Diestern der Dicarbonsäuren Diester der Kohlensäure eingesetzt, wie Diphenylcarbonat. Es können jedoch auch nur aromatische Dihydroxyverbindungen, Dicarbonsäuren und Diphenylcarbonat für die Polyestercarbonatherstellung eingesetzt werden. Bei der Polyestercarbonatherstellung ist im allgemeinen die Summe aus eingesetzten Diestern von Dicarbonsäuren und Dicarbonsäuren kleiner als die Summe an eingesetzten Bisphenolen, alles bezogen auf Molteile. Wie schon für das Acetatverfahren beschrieben, können beim Phenylesterverfahren auch Katalysatoren zur Beschleunigung der Kondensationsreaktion verwendet werden, können Hilfslösemittel eingesetzt werden und kann eine Festphasenkondensation des Präpolymeren erfolgen. Katalysatoren und Hilfslösemittel können dieselben sein, wie schon beim Acetatverfahren beschrieben.

Das Zweiphasengrenzflächenverfahren zur Herstellung von Polyestern und Polyestercarbonaten wird beispielsweise beschrieben in den Patentschriften EP 68 014, 88 322, 134 898, 151 750, 182 189, 219 708, 272 426 und DE-OS 2 940 024, 3 007 934, 3 440 020 und in der Monographie, Polymer Reviews, Volume 10, Condensation Polymers by Interfacial and Solution Methods, Paul W. Morgan, Interscience Publishers New York 1965, Kap. VIII, S. 325, Polyester.

Als Ausgangskomponenten für die Herstellung der erfindungsgemäßen Polyester und Polyestercarbonate nach dem Zweiphasengrenzflächenverfahren dienen bevorzugt aromatische Dihydroxyverbindungen, Dicarbonsäuredichloride und Phosgen.

Auch der Einsatz von Terephthalsäure und/oder Isophthalsäure ist beim Zweiphasengrenzflächenverfahren möglich, wobei intermediär mit Hilfe von Phosgen Dicarbonsäurechloride bzw. -dichloride gebildet werden.

Die Polykondensation erfolgt beim Zweiphasengrenzflächenverfahren in einem Zweiphasensystem aus wäßrig-alkalischer Lösung und mit Wasser nicht mischbarem organischem Lösungsmittel. Beispielsweise wird die aromatische Dihydroxyverbindung, in wäßrigem Alkali als Diphenolat gelöst, mit dem Dicarbonsäuredichlorid und gegebenenfalls Phosgen, gelöst im organischen Lösungsmittel, unter Rühren umgesetzt. Der sich bildende Polyester bzw. das sich bildende Polyestercarbonat werden im organischen Lösungsmittel gelöst. Wenn Dicarbonsäuredichlorid und Phosgen eingesetzt werden, wenn also Polyestercarbonate hergestellt werden, dann können das Dicarbonsäuredichlorid und das Phosgen auf unterschiedliche Weise eingesetzt werden. So kann beispielsweise zunächst nur Dicarbonsäurechlorid mit dem Alkalibisphenolat umgesetzt werden und dann erst das für die Vollendung der Polykondensation benötigte Phosgen zugesetzt werden. Es können beispielsweise auch das Dicarbonsäuredichlorid und ein Teil des benötigten Phosgens gemeinsam mit dem Bisphenolat umgesetzt werden und dann der Rest der benötigten Phosgengesamtmenge zugesetzt werden. Die Polykondensation wird im allgemeinen mit Hilfe eines Katalysators durchgeführt. Der Katalysator, unten näher beschrieben, kann beispielsweise zugesetzt werden, wenn die Dicarbonsäurechloride und das Phosgen bereits eine gewisse Zeit mit dem Alkalibisphenolat reagiert haben. Er kann jedoch auch schon, zumindest teilweise, gleich zu Beginn der Reaktion eingesetzt werden. Es können aber auch unterschiedliche Katalysatoren in einer Kondensationsreaktion verwendet werden, wobei der Zugabezeitpunkt der einzelnen Katalysatoren unterschiedlich sein kann. Im allgemeinen wird die Polykondensation zur Einstellung bestimmter Molekulargewichte in Gegenwart von Kettenbegrenzern durchgeführt. Zur Erzielung bestimmter Eigenschaften, so z.B. von Strukturviskosität, können beispielsweise Verzweiger eingesetzt werden. Auch Antioxidantien können, z.B. zur Erzielung sehr farbheller Polykondensate, in der Reaktion Einsatz finden.

Als mit Wasser nicht mischbare organische Lösungsmittel können beispielsweise chlorierte Kohlenwasserstoffe, wie Chloroform, Dichlorethan, Tri- und Tetrachlorethylen, Tetrachlorethan, Dichlormethan, Chlorbenzol und Dichlorbenzol, aber auch nicht chlorierte Kohlenwasserstoffe, wie Toluol und Xylol, eingesetzt werden. Bevorzugt werden Chlorbenzol oder Dichlormethan oder Mischungen von beiden verwendet.

Als Kettenbegrenzer werden Verbindungen eingesetzt, wie sie von Polyestern und Polyestercarbonaten her bekannt sind, so z.B. sekundäre Amine, Phenole und Säurechloride. Bevorzugt werden Phenole, wie Phenol und Alkylphenol, besonders bevorzugt solche mit $C_1$-$C_{12}$-Alkylgruppen, wie p-tert.-Butylphenol, m- und p-3,5-Dimethyl-heptyl-phenol und m- und p-1,1,3,3-Tetramethylbutylphenol sowie Hydroxydiphenyl und p-Cumenylphenol verwendet. Ganz besonders bevorzugt wird das p-1,1,3,3-Tetramethylbutylphenol (p-Isooctylphenol) eingesetzt.

Als Verzweiger dienen, falls benutzt, in bekannter Weise geringe Mengen, vorzugsweise Mengen zwischen 0,05 und 3,0 Mol.-% (bezogen auf eingesetzte Diphenole), an drei- oder mehr als dreifunktionellen Verbindungen, insbesondere solchen mit drei oder mehr als drei phenolischen Hydroxylgruppen, um verzweigte Polyester oder Polyestercarbonate zu erhalten. Einige der verwendbaren Verbindungen mit drei oder mehr als drei phenolischen Hydroxylgruppen sind

Phloroglucin,

4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4'-,4"-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Katalysatoren können z.B. tertiäre Amine und/oder Phasentransferkatalysatoren, wie z.B. quartäre Ammonium- und Phosphoniumverbindungen und/oder Kronenether eingesetzt werden. Bevorzugte Katalysatoren sind beispielsweise N-Ethylpiperidin, Tetrabutylammoniumbromid und/oder Triphenylbenzylphosphoniumbromid.

Die erfindungsgemäßen Polyester und Polyestercarbonate weisen im allgemeinen mittlere Molekulargewichte $\overline{M}w$ von mindestens 10 000, vorzugsweise von 10 000 bis 250 000 und insbesondere von 15 000 bis 80 000 auf.

Die erfindungsgemäßen Polyester und Polyestercarbonate können noch Farbstoffe, Pigmente, Stabilisatoren, Flammschutzmittel, Füll- und Verstärkungsstoffe, wie Glasfasern oder Kohlenstoff-Fasern oder andere Hilfsstoffe eingemischt enthalten. Die jeweils günstigste Menge richtet sich nach dem jeweiligen Verwendungszweck.

Die erfindungsgemäßen Polyester und Polyestercarbonate lassen sich für die Herstellung von Formkörpern, Fasern, Filamenten und Filmen verwenden.

Sie eignen sich besonders aufgrund ihrer hohen Wärmestandfestigkeit, Zähigkeit, Hydrolysestabilität, Kriechstromfestigkeit und Spannungsrißempfindlichkeit für den Einsatz im Elektrosektor, insbesondere bei hohen Temperaturen, weiterhin im Beleuchtungssektor und für die Ausstattung im Automobilmotorraum. So können aus ihnen mit Vorteil elektrische Isolatoren, wie Lampenhalterungen, Reflektoren für Leuchten und Halterungen im Motorraum angefertigt werden.

Beispiel 1: Polyester

In 4400 g Wasser wurden unter Rühren 90 g NaOH (2,25 Mol), 1,13 g N-Ethylpiperidin (0,01 Mol) und 310 g 1,1-Bis-(4-hydroxyphenyl)-3,3,5-trimethyl-cyclohexan(1 Mol) gelöst. Dazu wurden unter weiterem Rühren 4000 g Methylenchlorid gegeben, in dem 5,36 g p-(1,1,3,3-Tetramethylbutyl)-phenol (0,026 Mol) und 205,6 g Isophthalsäuredichlorid (1,013 Mol) gelöst enthalten waren. Dann wurde noch eine Stunde weitergerührt. Die Temperatur wurde bei 20 bis 35°C gehalten. Anschließend wurde die organische Phase abgetrennt und die bisphenolatfreie wäßrige alkalische Phase verworfen. Die organische Phase wurde mit verdünnter wäßriger Phosphorsäure und anschließend mehrfach mit destilliertem Wasser gewaschen, bis sie elektrolytfrei war. Durch Abdampfen des Methylenchlorids aus der organischen Phase wurde ein farbloser Polyester erhalten, der noch 15 Stunden bei 130°C im Vakuum von Restspuren Methylenchlorid befreit wurde. Die Messung der relativen Viskosität des Polyesters ergab einen Wert von $\eta_{rel} = 1{,}313$ (gemessen an der Methylenchloridlösung bei 25°C, c = 5 g/l Lösung). Die Differentialthermoanalyse ergab für die Glasübergangstemperatur des Polyesters einen Wert von $T_g = 256$°C.

Beispiel 2: Polyestercarbonat

In 4300 g Wasser wurden unter Rühren 82 g NaOH (2,05 Mol) und 310 g 1,1-Bis-(4-hydroxyphenyl)-3,3,5-trimethyl-cyclohexan(1 Mol) gelöst. Dazu wurden unter weiterem Rühren 3900 g Methylenchlorid gegeben, in dem 5,36 g p-(1,1,3,3-Tetramethylbutyl)-phenol und 182,7 g Isophthalsäuredichlorid (0,9 Mol) gelöst enthalten waren. Nach einer halben Stunde Rührzeit werden weitere 64 g NaOH (1,6 Mol) als 50%ige wäßrige Lösung zugesetzt. Dazu wurden unter weiterem Rühren 29,7 g Phosgen (0,3 Mol) gasförmig in das Reaktionsgemisch eingeleitet. Nach dem Phosgeneinleiten wurden 1,13 g N-Ethylpiperidin (0,01 Mol) gesetzt und noch eine Stunde lang nachgerührt. Die Temperatur wurde während der ganzen Zeit bei 20 bis 35°C gehalten. Die Aufarbeitung des Reaktionsgemisches erfolgte wie in Beispiel 1 beschrieben. Auch hier war die wäßrige alkalische Phase bisphenolatfrei. Das isolierte und getrocknete Polyestercarbonat zeigte folgende Werte: $\eta_{rel}$ = 1,300, $T_g$ = 252°C (beide Werte gemessen wie in Beispiel 1 beschrieben).

Beispiele 3 - 6: Polyester

Auf die in Beispiel 1 beschriebene Weise wurden 4 weitere Polyester hergestellt, wobei nur die in der Tabelle aufgeführten Ausgangsstoffe, wie dort angegeben, variiert wurden. Die an den erhaltenen Polyestern gemessenen Werte der relativen Viskosität $\eta_{rel}$ und der Glasübergangstemperatur $T_g$ sind in der Tabelle enthalten.

Beispiele 7 - 9: Polyestercarbonate

Auf die in Beispiel 2 beschriebene Weise wurden 3 weitere Polyestercarbonate hergestellt, wobei nur die in der Tabelle aufgeführten Ausgangsstoffe, wie dort angegeben, variiert wurden. Die an den erhaltenen Polyestercarbonaten gemessenen Werte der relativen Viskosität $\eta_{rel}$ und der Glasübergangstemperatur $T_g$ sind in der Tabelle enthalten.

Tabelle

| Polyester (Beispiele 3 - 5) und Polyestercarbonate (Beispiele 6 - 8) | | | | | | | |
|---|---|---|---|---|---|---|---|
| | Ausgangsstoffe in Mol | | | | | | |
| Beispiel | BPTMC | BPA | TER | ISO | $COCl_2$ | $\eta_{rel}$ | $T_g$ (°C) |
| 3 | 0,50 | 0,50 | 1,013 | - | - | 1,298 | 262 |
| 4 | 1,00 | - | 0,513 | 0,500 | - | 1,287 | 286 |
| 5 | 0,25 | 0,75 | 1,013 | - | - | 1,305 | 236 |
| 6 | 1,00 | - | 1,013 | - | - | 1,325 | 303 |
| 7 | 1,00 | - | 0,81 | 0,09 | 0,30 | 1,290 | 299 |
| 8 | 0,25 | 0,75 | 0,25 | - | 0,95 | 1,311 | 187 |
| 9 | 0,25 | 0,75 | 0,25 | 0,25 | 0,70 | 1,335 | 197 |

BPTMC = 1,1-Bis-(4-hydroxyphenyl)-3,3,5-trimethylcyclohexan,
BPA = Bisphenol A,
TER = Terephthalsäuredichlorid;
ISO = Isophthalsäuredichlorid;
$\eta_{rel}$ = relative Viskosität, gemessen wie in Beispiel I,
$T_g$ = Glasübergangstemperatur des erhaltenen Polyesters oder Polyestercarbonates aus Differentialthermoanalyse

**Patentansprüche**

**Patentanspruch für folgenden Vertragsstaat : NL**

**1.** Polyester und Polyestercarbonate aus

a) aromatischen Diphenolen einerseits und
$b_1$) aliphatischen und/oder cycloaliphatischen und/oder aromatischen Dicarbonsäuren und gegebenenfalls
$b_2$) Kohlensäure,
enthaltend $b_1$) in einer Menge von 0,1 bis 100 Mol-% und gegebenenfalls $b_2$) in einer Menge von 0 bis 99,9 Mol-%, bezogen auf ($b_1$ + $b_2$), dadurch gekennzeichnet, daß a) zu 0,1 bis 100 Mol-% aus Diphenolen der Formel

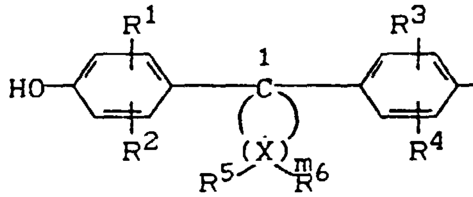

(I),

besteht, worin

$R^1$, $R^2$, $R^3$ und $R^4$ unabhängig voneinander Wasserstoff, $C_1$-$C_{12}$-Kohlenwasserstoffrest, Halogen,

m eine ganze Zahl 4 oder 5 ist,

$R^5$ und $R^6$, für jedes X individuell wählbar, unabhängig voneinander Wasserstoff oder $C_1$-$C_6$-Alkyl und

X
Kohlenstoff bedeuten,

mit der Maßgabe, daß an mindestens einem Atom X $R^5$ und $R^6$ gleichzeitig Alkyl bedeuten.

**Patentanspruch für folgenden Vertragsstaat : ES**

**1.** Verfahren zur Herstellung von Polyestern und Polyestercarbonaten aus

a) aromatischen Diphenolen einerseits und
$b_1$) aliphatischen und/oder cycloaliphatischen und/oder aromatischen Dicarbonsäuren und gegebenenfalls
$b_2$) Kohlensäure,
enthaltend $b_1$) in einer Menge von 0,1 bis 100 Mol-% und gegebenenfalls $b_2$) in einer Menge von 0 bis 99,9 Mol-%, bezogen auf ($b_1$ + $b_2$), dadurch gekennzeichnet, daß a) zu 0,1 bis 100 Mol-% aus Diphenolen der Formel

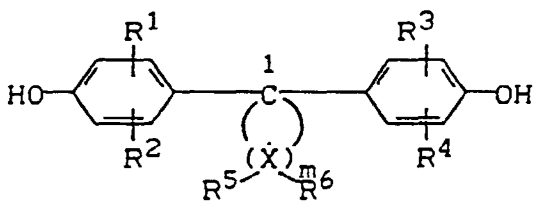

(I),

besteht, worin

$R^1$, $R^2$, $R^3$ und $R^4$ unabhängig voneinander Wasserstoff, $C_1$-$C_{12}$-Kohlenwasserstoffrest, Halogen,

m eine ganze Zahl von 4 oder 5 ist,

$R^5$ und $R^6$, für jedes X individuell wählbar, unabhängig voneinander Wasserstoff oder $C_1$-$C_6$-Alkyl und

X Kohlenstoff bedeuten,

mit der Maßgabe, daß an mindestens einem Atom X $R^5$ und $R^6$ gleichzeitig Alkyl bedeuten,
wobei man die entsprechenden Dicarbonsäuredichloride mit aromatischen Dihydroxyverbindungen gegebenenfalls im Gegenwart von Phosgen in Gegenwart von Pyridin als Säureacceptor und Pyridin oder Chlorierten Kohlenwasserstoffen als Lösemittel umsetzt.

## Claims

**Claim for the following Contracting State : NL**

**1.** Polyesters and polyester carbonates prepared from,

a) on the one hand, aromatic diphenols and
$b_1$) aliphatic and/or cycloaliphatic and/or aromatic dicarboxylic acids and optionally
$b_2$) carbonic acid
containing $b_1$) in a quantity of 0.1 to 100 mol.% and optionally $b_2$) in a quantity of 0 to 99.9 mol.%, relative to ($b_1$ + $b_2$), characterised in that a) consists to an extent of 0.1 to 100 mol.% of diphenols of the formula

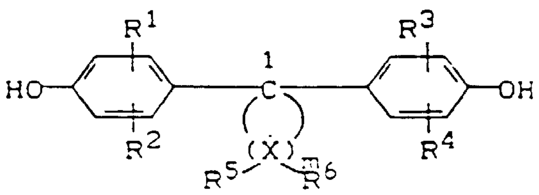

(I),

in which

$R^1$, $R^2$, $R^3$ and $R^4$ mutually independently mean hydrogen, $C_1$-$C_{12}$ hydrocarbon residue, halogen,

m is an integer 4 or 5,

$R^5$ and $R^6$, individually selectably for each X, mutually independently mean hydrogen or $C_1$-$C_6$ alkyl and

X means carbon,

providing that on at least one atom X, $R^5$ and $R^6$ simultaneously mean alkyl.

**Claim for the following Contracting State : ES**

**1.** Process for the production of polyesters and polyester carbonates prepared from,

a) on the one hand, aromatic diphenols and
$b_1$) aliphatic and/or cycloaliphatic and/or aromatic didarboxylic acids and optionally
$b_2$) carbonic acid
containing $b_1$) in a quantity of 0.1 to 100 mol.% and optionally $b_2$) in a quantity of 0 to 99.9 mol.%, relative to ($b_1$ + $b_2$), characterised in that a) consists to an extent of 0.1 to 100 mol.% of diphenols of the formula

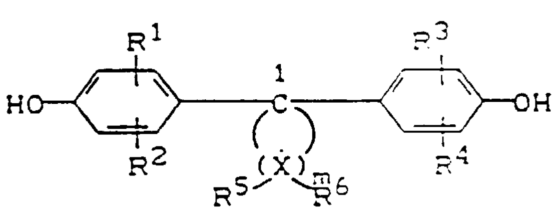

(I),

in which

$R^1$, $R^2$, $R^3$ and $R^4$ mutually independently mean hydrogen, $C_1$-$C_{12}$ hydrocarbon residue, halogen,

m is an integer 4 or 5,

$R^5$ and $R^6$, individually selectably for each X, mutually independently mean hydrogen or $C_1$-$C_6$ alkyl and

X means carbon,

providing that on at least one atom X, $R^5$ and $R^6$ simultaneously mean alkyl, wherein the corresponding dicarboxylic acid dichlorides are reacted with aromatic dihydroxy compounds, optionally in the presence of phosgene, in the presence of pyridine as acid acceptor and pyridine or chlorinated hydrocarbons as solvent.

## Revendications

### Revendication pour l'Etat contractant suivant : NL

**1.** Polyesters et polyesters-carbonates de

a) des diphénols aromatiques d'une part et
$b_1$) des acides dicarboxyliques aliphatiques et/ou cycloaliphatiques et/ou aromatiques et le cas échéant
$b_2$) l'acide carbonique,
contenant $b_1$) en quantité de 0,1 à 100 mol % et le cas échéant $b_2$) en quantité de 0 à 99,9 mol % par rapport à ($b_1$ + $b_2$), caractérisés en ce que a) consiste pour 0,1 à 100 mol % en diphénols de formule

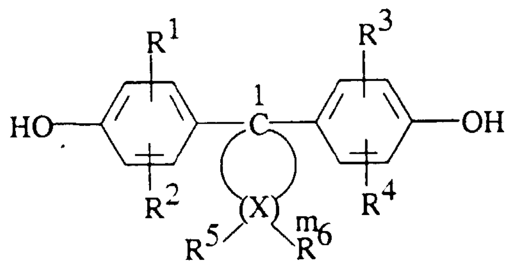

(I),

dans laquelle

$R^1$, $R^2$, $R^3$ et $R^4$ représentent chacun, indépendamment les uns des autres, l'hydrogène, un radical hydrocarboné en $C_1$-$C_{12}$, un halogène,
m est un nombre entier égal à 4 ou 5,
$R^5$ et $R^6$, qui peuvent être choisis individuellement pour chacun des atomes X, représentent chacun, indépendamment l'un de l'autre, l'hydrogène ou un groupe alkyle en $C_1$-$C_6$ et
X représente le carbone,

sous réserve que, sur au moins un atome X, $R^5$ et $R^6$ représentent tous deux des groupes alkyle.

### Revendication pour l'Etat contractant suivant : ES

**1.** Procédé de préparation de polyesters et polyesters-carbonates de

a) des diphénols aromatiques d'une part et
$b_1$) des acides dicarboxyliques aliphatiques et/ou cycloaliphatiques et/ou aromatiques et le cas échéant
$b_2$) l'acide carbonique,

contenant $b_1$) en quantité de 0,1 à 100 mol % et le cas échéant $b_2$) en quantité de 0 à 99,9 mol %, par rapport à ($b_1$+$b_2$), caractérisé en ce que a) consiste pour 0,1 à 100 mol % en diphénols de formule

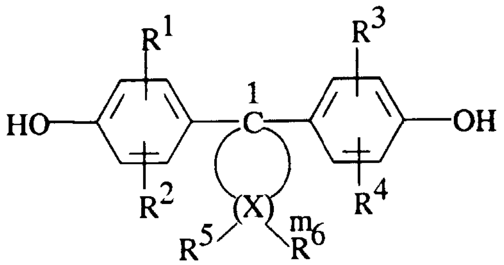

(I),

dans laquelle

$R^1$, $R^2$, $R^3$ et $R^4$ représentent chacun, indépendamment les uns des autres, l'hydrogène, un radical hydrocarboné en $C_1$-$C_{12}$, un halogène,
m est un nombre entier égal à 4 ou 5,
$R^5$ et $R^6$, qui peuvent être choisis individuellement pour chaque atome X, représentent chacun, indépendamment l'un de l'autre, l'hydrogène ou un groupe alkyle en $C_1$-$C_6$ et
X représente le carbone,

sous réserve que, sur au moins un atome X, $R^5$ et $R^6$ représentent tous deux des groupes alkyle,
par réaction des dichlorures d'acides dicarboxyliques correspondants avec des composés aromatiques dihydroxylés éventuellement en présence de phosgène, en présence de pyridine qui sert d'accepteur d'acide et de pyridine ou d'un hydrocarbure chloré servant de solvant.